Europäisches Patentamt

European Patent Office

Office européen des brevets

(11) Publication number: 0 344 951
A2

# EUROPEAN PATENT APPLICATION

(21) Application number: 89305115.1

(22) Date of filing: 19.05.89

(51) Int. Cl.⁴: G06F 9/26

(30) Priority: 31.05.88 US 200279

(43) Date of publication of application:
06.12.89 Bulletin 89/49

(84) Designated Contracting States:
DE GB IT NL

(71) Applicant: RAYTHEON COMPANY
Executive Offices 141 Spring Street
Lexington Massachusetts 00173(US)

(72) Inventor: Kaupinis, William, M.
95 Riverdale Street
Methuen Massachusetts(US)
Inventor: Yuen, Kai Y.
183 Hunting Road
Needham Massachusetts(US)

(74) Representative: Jackson, David Spence et al
REDDIE & GROSE 16, Theobalds Road
London, WC1X 8PL(GB)

(54) Method and apparatus for controlling execution speed of computer processor.

(57) An improved computer processor capable of ex-
ecuting software instructions at two rates has two
sets of microinstructions in a microsequencer (16),
one for executing software instructions at a first rate
and a second for executing instructions at a second
rate. The speed of execution is controlled by a
speed bit stored in a latch (40) which, depending on
the value of the speed bit, selects microinstructions
from either the first or second set. The speed bit is
set to a first state by a software instruction included
in blocks of software instructions to be executed at a
first rate. The bit is automatically set to a second
state upon execution of blocks of software instruc-
tions which do not contain a software instruction to
set the bit to the first state such that these blocks
are automatically executed at the second rate. The
speed bit of a block of instructions which is inter-
rupted by interrupt logic (30) or by a subroutine is
stored in a subroutine stack (34) together with the
address of the interruption in the program.

## METHOD AND APPARATUS FOR CONTROLLING EXECUTION SPEED OF COMPUTER PROCESSOR

### Background of the Invention

This invention relates generally to computer processors and particularly to apparatus for controlling the throughput of a computer processor.

As the computer art has evolved, it has become practical to make improved computer processors which execute software instructions more quickly than programs existing when a particular computer system is first built. It then may become desirable to upgrade an existing system by replacing its computer processor with a computer processor in which improved programs may be run most efficiently. At the same time, however, it is desirable that any computer processor be adapted to use any originally developed software so that the expense and effort of replacing such software may be avoided.

One requirement for an improved processor is that such a processor be capable of executing the same software instructions as the computer processor being replaced. A second requirement for an improved processor arises when the speed of execution of a group of instructions is critical. For example, in complicated military equipment such as guided missiles a specified time interval may be required between the detection of a particular situation and the generation of control signals to change the course of such missile. The interval then may be filled by executing a program whose length is such that the time taken for execution is equal to the specified time interval. It may be seen that if a similar program were to be executed on an improved processor, the delay time necessary to execute the instructions will decrease and the specified time interval would not be filled.

### Summary of the Invention

With the foregoing background in mind, it is an object of the present invention to provide an improved computer processor in which computer software instructions may be executed at at least a first rate and at a second rate.

It is a further object of this invention to provide an improved computer processor in which existing software instructions may be executed at the same rate as in an existing computer processor, but which may be adapted to execute software instructions at a faster rate.

The foregoing and other objects of the invention are accomplished by a computer processor having a microsequencer. The microsequencer contains two sets of microinstructions, a first set of microinstructions for executing software instructions at a first rate, and a second set of microinstructions for executing software instructions at a second rate. The microsequencer is responsive to control signals from a bit latch in which a speed (indicating whether the first or second set of microinstructions is to be executed) is held. The speed bit may be set to a first state by a software instruction included in blocks of software intended to run at the first rate. On each subroutine call and interrupt the state of the speed bit is stored in a subroutine stack and the stored bit is set to a second state such that the subroutine or interrupt handler executes at the second rate unless an instruction to set the bit to the first state is included in the subroutine or interrupt handler. Upon return from a subroutine or interrupt, the state of the first bit is restored from the subroutine stack.

### Brief Description of the Drawings

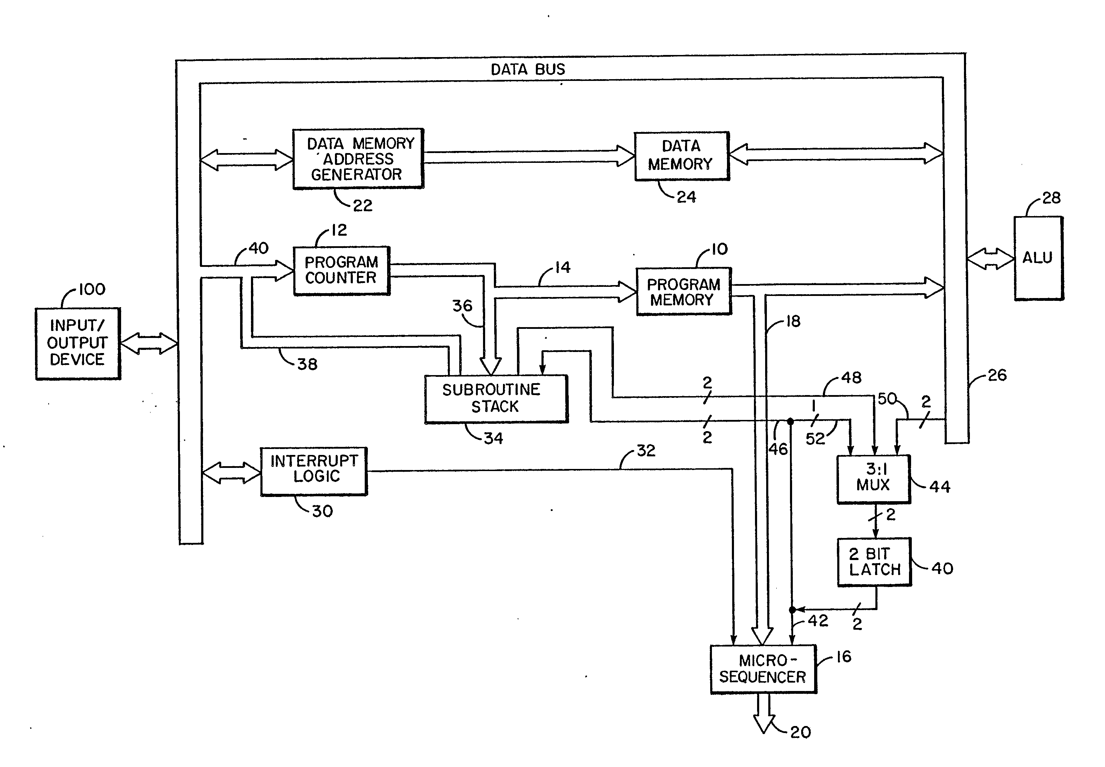

For a more complete understanding of this invention, reference is now made to the following description of the FIGURE in which:

The single FIGURE is a block diagram, greatly simplified, of a computer processor constructed according to the present invention.

### Description of the Preferred Embodiment

The single FIGURE depicts a computer processor (not numbered) capable of executing software instructions at either a first rate or a second rate in accordance with a particular program to be run. One of skill in the art will note that many of the elements shown are well known in the art of computer processors, so such elements will not be described in detail. One of skill in the art will also note that some standard elements of a computer processor, such as power, timing and control wires, are not shown, but it will be understood that a computer processor made according to the invention contains such elements. It will also be recognized that computer processors may be constructed as a single integrated circuit chip or as a collection of integrated circuit chips, but the invention described herein is applicable regardless of how the computer processor is constructed.

The computer processor is controlled by software instructions stored in a program memory 10. A program counter 12 provides an address to program memory 10 on an address bus 14 to select the software instruction which is to be next executed.

The selected instruction is applied to microsequencer 16 on bus 18. Microsequencer 16 then generates known control signals on control lines 20 which run to all the illustrated elements of the computer processor. For the sake of clarity, the connection to each illustrated element is not shown. As is known, the instruction on bus 18 ordinarily serves as an address to a microcode memory (not shown) within the microsequencer 16. Microinstructions representing the control signals which should be on control lines 20 to make the computer processor execute the selected instruction are stored in the microcode memory. Here, in addition, the address applied to microsequencer 16 consists of the instruction on bus 18 along with a control signal from the two-bit latch 40 supplied on line 42. The purpose of that bit will be described in greater detail below. As is also known, the values on control lines 20 may have to change several times to execute one software instruction (i.e., several microinstructions are executed to execute one software instruction). Each microinstruction is applied successively to the control lines 20 each time a clock (not shown) produces a timing pulse.

The control lines 20 connect to the other elements of the computer processor. For example, some of the control lines 20 run to data memory address generator 22 and data memory 24 to select memory locations in data memory 24 to either read or write data words. Data memory 24 is most likely some form of Random Access Memory (RAM).

Data words are read out of, or written into, data memory 24 via data bus 26. Data bus 26 runs throughout the computer processor, allowing data to pass between the elements of the computer processor. In particular, data bus 26 runs to an arithmetic logic unit (ALU) 28 which performs arithmetic and logical operations on the data. Data bus 26 also runs to input/output device 100. Input/output device 100 may be any known device, with the exact nature of the device depending on the system in which the computer processor is used. For example, where the computer processor is employed in a missile, input/output device 100 may be a known apparatus for passing guidance commands.

As is known, computer software instructions might be executed in the order in which they are stored in program memory 10. In such a case, program counter 12 increments the value of the address supplied to program memory 10 on address bus 14 each time a new software instruction is to be executed.

However, greater utility may be obtained if the order in which software instructions are executed is not related to the order in which such instructions are stored in memory. Two known techniques for accomplishing such an end are subprogram calls and interrupts. Such techniques are similar except that a subroutine call is caused by the execution of a particular software instruction and an interrupt is caused by some external event detected by interrupt logic 30. Microsequencer 16 responds to either event because the control line 32 signals an interrupt and the software instruction calling the subroutine is passed to microsequencer on bus 18.

In response to either a subroutine call or an interrupt, microsequencer 16 causes a new address to be loaded into program counter 12. The address is the address in program memory 10 of the first instruction in a subprogram to be executed (in response to a subprogram call) or an interrupt handler to be executed (in response to an interrupt). Herein, both a subprogram and an interrupt handler will be referred to as a "block" of software instructions.

The utility of subprograms and interrupts is not fully realized unless the computer processor is adapted to "return" to the sequence of instructions being executed when the subprogram call or interrupt occurred. To enable such return, the address in program counter 12 is stored in subroutine stack 34 before a new address is loaded in the program counter 12. When an instruction indicates the block of-code executed in response to the subroutine call or interrupt is finished, the return is made by taking the address from subroutine stack 34 and placing it in program counter 12 via a bus 38. It will be understood that use of a stack to store addresses from program counter 12 enables one block to be interrupted by another block and to have that block subsequently interrupted by yet another block so as to allow what is commonly called "nesting" of blocks.

Here, the computer processor is an improved processor which, through application of known technological improvements, is adapted to execute software instructions faster than an existing processor with the same clock frequency. The improvements enable each software instruction to be executed with fewer clock cycles than an existing computer processor. In other words, the improved computer processor executes software at a first rate which is faster than some second rate at which the existing computer processor executed software.

Where, for reasons described above, it is necessary to execute a piece of software at the second rate, one bit of latch 40, hereinafter called the "speed bit," can be set to a second state. As described above, line 42 is connected to the speed bit and provides one bit of the address used by microsequencer 16 to locate the microinstructions needed to execute a software instruction. The rest of the bits of that address are supplied by the instruction in program memory 10 via bus 18. A little thought will reveal that when the speed bit 40 is in a first state, each instruction applied to microsequencer 16 will cause the execution of different microinstructions than when the speed bit is in a second state.

Here, the microinstructions executed when the speed bit is in the first state are microinstructions which control the computer processor to execute at the first rate. The microinstructions executed when the speed bit is in the second state are the microinstructions which control the computer processor to execute instructions at a second, slow rate.

For example, suppose a particular instruction is executed for the existing processor in eight clock pulses and is represented by the binary code 11001100. Suppose further that the same instruction can be executed with four microinstructions (i.e., four clock pulses) in the improved processor. Suppose further that the value of "1" in the speed bit causes the computer processor to execute at the first, faster rate and a value of "0" causes the computer processor to execute at the second, slower rate. At address 110011001 of the microcode memory (not shown) of microsequencer 16 the four microinstructions would be stored. Those same four instructions would be stored at address 110011000 of the microcode memory. Additionally, associated with those instructions would be four more microinstructions which cause the computer processor to take no action. Such instructions are well known, commonly by the term "NOP" instructions. Thus, it can be seen that when the speed bit has a value of 1, the four microcode instructions will be executed in four clock cycles - faster than in the existing computer processor. However, when the speed bit has a value of 0, the four microcode instructions plus four NOPs will be executed in eight clock cycles - the same amount of time as in the existing computer processor. Thus, the state of the speed bit controls the speed of execution of software instructions.

Latch 40 is connected to data bus 26 via multiplexer (MUX) 44. This connection allows the speed bit to be set to a 0 or 1. Here, microsequencer 16 generates the appropriate control signals 20 in response to software instruction to set the speed bit of latch 40 to a 0 or 1. Thus, a block of software instructions to be executed at the faster rate will contain, as its first instruction, the instruction which sets the speed bit to a 1.

Because existing software must sometimes be run at the slower rate but does not contain instructions to set the bit to 0, the speed bit must be set to a 0 each time a block of code is to be executed. It should be recalled that a new block of software begins to execute when the microsequencer 16 responds either to an interrupt or a subroutine call. The microinstructions executed by microsequencer 16 in response to those events cause a 0 to be loaded into the speed bit of latch 40. In that way, whenever a new block of code is entered, the speed bit is always set to 0 and will remain set at 0 unless an instruction in the block requires setting to 1. In other words, each block of software executes at the slower rate unless it contains an instruction to set the speed bit to 1. Since existing blocks of software do not contain such an instruction, existing software executes at the slower rate, thereby ensuring all software designed to execute in a particular interval of time on an existing computer processor will execute in the same interval of time on the improved processor.

Here, at the beginning of each block of software, the speed bit gets its value from a second bit to latch 40, called the "default bit." The microinstructions executed when responding to a subroutine call or interrupt, (i.e., the microinstructions executed when a new block of software is entered), cause the value of the default bit via line 52 to pass through MUX 44 to be stored in the speed bit. Where the default bit is given a value of 0, each new block will begin execution with the speed bit set to 0, as is required. Here, the default bit is part of latch 40 and its value can be set to 0 by a software instruction in much the same way as the speed bit can be changed.

To ensure each block of software executes at the correct speed, the speed bit is set at the beginning of each block. However, setting the speed bit only at the beginning of each block is not sufficient. The speed bit must also be set when execution returns to a block after a subroutine or interrupt. Setting the speed bit upon return is necessary because the block of code executed as part of the subroutine or interrupt handler may have changed the setting of the speed bit. Upon return to a block of software instructions, however, it is not sufficient to merely set the speed bit to the value of the default bit. The speed bit must be set to the value it had when the block being returned to was being executed before the interrupt of subroutine call. Thus, before a new block of software is entered, the value of the speed bit must be saved.

Here, the value of the speed bit is saved on the subroutine stack 34 in the same way as the value of program counter 12. Thus, each storage location in subroutine stack 34 must store a digital word with at least one more bit than the words in program counter 12. The value of the default bit may also be stored on the subroutine stack 34 in the same manner. When a new block of software is entered (i.e., upon a subroutine call or interrupt), the value of the speed bit passes to subroutine stack 34 via line 46. The speed bit is stored at the same time as the value of program counter 12. Upon a return, the value of the speed bit stored on subroutine stack 34 is passed to latch 40 via line 48 and MUX 44. Thus, it can be seen that setting the speed bit to 1 at the beginning of a block of software means the block will be executed at the faster rate. Conversely, not setting the speed bit at the beginning of a block means the entire block will be executed at the slower rate comparable to existing processors.

Having described one embodiment of the invention, numerous variations will be apparent to one of skill in the art. For example, latch 40 might contain a plurality of speed bits which would enable the computer processor to execute instructions at more than two rates. Additionally, the default bit might be given a value of 1 so that each block of software instructions executed at the faster rate unless it contained a software instruction to set the speed bit to a 0. In other variations, blocks of software might be executed in response to function calls or other software instructions instead of being limited only to subroutine calls and interrupts. Therefore, it is to be understood that the present invention is to be limited only by the spirit and scope of the appended claims.

## Claims

1. In a computer processor adapted to execute software instructions at a first rate, said computer processor adapted to sequentially execute blocks of software instructions and to disrupt the sequential execution of software instructions in a first block by executing computer software instructions in a second block, said computer processor also adapted to return to sequential execution of the computer software instructions in the first block after execution of the instructions in the second block, an improvement comprising:

(a) means, responsive to a control signal having a first value and a second value, for executing software instructions at the first rate when the control signal has the first value and for executing software instructions at a second rate when the control signal has the second value;

(b) means for storing the value of the control signal and setting the control signal to the second value when the sequential execution of a first block of software instructions is disrupted by the execution of software instructions in a second block of software instuctions;

(c) means for setting the control signal to the stored value when the computer processor returns to sequential execution of the computer software instructions in the first block after execution of the instructions in the second block.

2. The computer processor of claim 1 wherein the execution of a computer software instruction causes the control signal to have the first value.

3. In a computer processor having a program memory for storing computer software instructions and providing a computer software instruction to a microsequencer in response to the value in a program counter, said microsequencer, in response to the applied computer software instruction, executing a first group of microinstructions in a first time interval, an improvement comprising:

(a) a latch for storing one bit, said latch coupled to the microsequencer; and

(b) a second group of microinstructions executed in a second time interval by the microsequencer in response to the computer software instruction when the bit has a second value.